Europäisches Patentamt

European Patent Office

Office européen des brevets

(11) Publication number: **0 129 340**
**B1**

# EUROPEAN PATENT SPECIFICATION

(45) Date of publication of patent specification: **17.11.88**

(51) Int. Cl.⁴: **B 23 H 7/26**, B 23 H 9/14

(21) Application number: **84303406.7**

(22) Date of filing: **18.05.84**

(54) Electrical discharge machining apparatus for forming minute holes in a workpiece.

(30) Priority: **19.05.83 JP 88512/83**
**19.05.83 JP 88529/83**
**19.05.83 JP 88530/83**

(43) Date of publication of application:
**27.12.84 Bulletin 84/52**

(45) Publication of the grant of the patent:
**17.11.88 Bulletin 88/46**

(84) Designated Contracting States:
**DE FR GB**

(56) References cited:
**CH-A- 366 439**
**DE-A-2 721 576**
**DE-A-3 032 604**
**DE-A-3 203 605**
**DE-B-1 565 554**
**GB-A-2 069 396**
**US-A-3 806 691**
**US-A-4 123 645**

**Philips Technical Revue, vol. 30, 1969, no. 6/7**

(73) Proprietor: **Matsushita Electric Industrial Co., Ltd.**
**1006, Oaza Kadoma**
**Kadoma-shi Osaka-fu, 571 (JP)**

(72) Inventor: **Sato, Takeo**
**5-10-20 Sagamioono**
**Sagamihara-shi Kanagawa-ken (JP)**
Inventor: **Araki, Nobuhiro**
**3039-18 Sugao**
**Miyamae-ku Kawasaki (JP)**
Inventor: **Matsushita, Hisato**
**39-1 Kamiyama-cho**
**Midori-ku Yokohama (JP)**
Inventor: **Kawata, Koichi**
**6-18 6-chome Nagayama**
**Tama-shi Tokyo (JP)**

(74) Representative: **Senior, Alan Murray et al**
**J.A. KEMP & CO 14 South Square Gray's Inn**
**London WC1R 5EU (GB)**

## Description

The present invention relates to an apparatus for forming minute holes in a workpiece through an electrical discharge machining (EDM) or electroerosive machining process.

Electrical discharge machining (EDM) has conventionally been deemed inappropriate for forming minute holes in a workpiece for the reasons that machining accuracies such as surface roughness and out-of-roundness become more and more problematic as the diameter of a hole formed is smaller, and it is difficult to feed the electrode in minute steps.

There are two known EDM machining processes for forming a minute hole having a diameter of O.1 mm or smaller in a workpiece. In one process, the machining electrode is held at rest, and in the other process, the machining electrode is rotated about its own axis. Rotating the machining electrode could increase the machining speed, and improve out-of-roundness and accuracy of the shape of the hole formed. However, the machining process in which the electrode is held at rest during operation has heretofore been prevalent in the art since the electrode is not subjected to displacement and the time required for the electrode to form the hole is shorter.

Various electrode constructions are known for use in forming holes while the electrode is held at rest. Where a thin wire which requires no cutting is employed as an electrode, it is directly soldered to an electrode holder, or is plated, reinforced, and chucked, or protected and guided by a body of glass, ruby or the like and chucked. Where a relatively thick wire is used for an electrode, the tip end thereof is thinned by electrolytic grinding so as to serve as a machining electrode.

The above electrode constructions however fail to provide a degree of concentricity of a few microns or less between the machining tip and outer periphery of the electrode. It has been impossible to use such electrode in machining a hole while rotating the electrode since it is difficult to attach the electrode perpendicularly to the workpiece.

When a workpiece is subjected to an EDM process with the wire electrode held at rest, the shape of the wire electrode is transferred to the workpiece. No hole with small out-of-roundness would be formed in the workpiece if a commercially available thin wire finished to insufficient dimensional accuracies were used for machining.

One electrode construction used for machining a workpiece while the electrode is rotating is composed of a round rod having a diameter of about 1 mm which can be chucked. The electrode material as it is rotated is shaped into an electrode of a desired diameter by a reverse electrical discharge. Although the electrode thus formed has sufficient accuracy, it will take about one hour to form an electrode for forming a minute hole 30 micrometers across from an electrode material having a diameter of 1 mm. The thined portion of the electrode which has a diameter of 30 micrometers is short in length and hence in service life. Because the electrode will be displaced once detached from the chuck, the electrode has to be formed again each time it machines a minute hole in a workpiece.

Conventional EDM machines employ a ball-and-roller bearing by which the electrode is rotatably supported. The ball-and-roller bearing however cannot avoid displacements of the electrode by a few micrometers. The electrode assembly comprises a spindle construction as a whole which has a large stray capacity and hence cannot reduce the capacitance of an RC circuit. Where holes having a diameter of about 50 micrometers are formed by such an electrode assembly, accuracies such as out-of-roundness and surface roughness become extremely poor. The electrode assembly is heavy and its speed of response for feeding the electrode is necessarily reduced. Therefore, the electrode assembly has no smooth machining capability, and can machine holes in a practical range of diameters down to about 100 micrometers at minimum.

Another problem with the prior EDM machines is that it is quite a complex task to position the electrode accurately for forming a minute hole. Two processes have been available for positioning the machining electrode and workpiece with respect to each other in forming a hole having a diameter of 0.3 mm or smaller.

One positioning process is known as a contact sensing process in which an electric short circuit is sensed between the machining electrode and the workpiece, a contact position is read on a position scale or the like, and the electrode and the workpiece are relatively moved to a desired position according to the reading on the position scale. According to this process, a weak voltage is applied between a machining electrode and a workpiece placed in an insulative liquid contained in a machining bath on an X-Y table, while at the same time the machining electrode is moved horizontally toward the workpiece. When the machining electrode contacts the workpiece, a short-circuiting current flowing between the machining electrode and the workpiece is detected and the reading on the position scale at this time is set as 0. Asssuming that a desired position where a hole is to be pierced is spaced a distance $a$ in the direction of X from the position in which the workpiece and the machining electrode are in contact with each other, the X-Y table is moved a distance $a + d/2$ in the direction of X taking the diameter $d$ of the machining electrode into account, so that the central axis of the machining electrode will be in registration with the desired position. When the X-Y table is moved another distance $b + d/2$ in the direction of Y, the center of the machining electrode is brought accurately into registration with another position in which to pierce another hole.

The above process can provide a sufficient degree of accuracy where the machining electrode has a relatively large diameter. However, in case the machining electrode has a diameter of a few tens of micrometers for forming minute holes, the electrode lacks desired rigidity and tends to flex upon contact with the workpiece, resulting in the failure of accurate positioning.

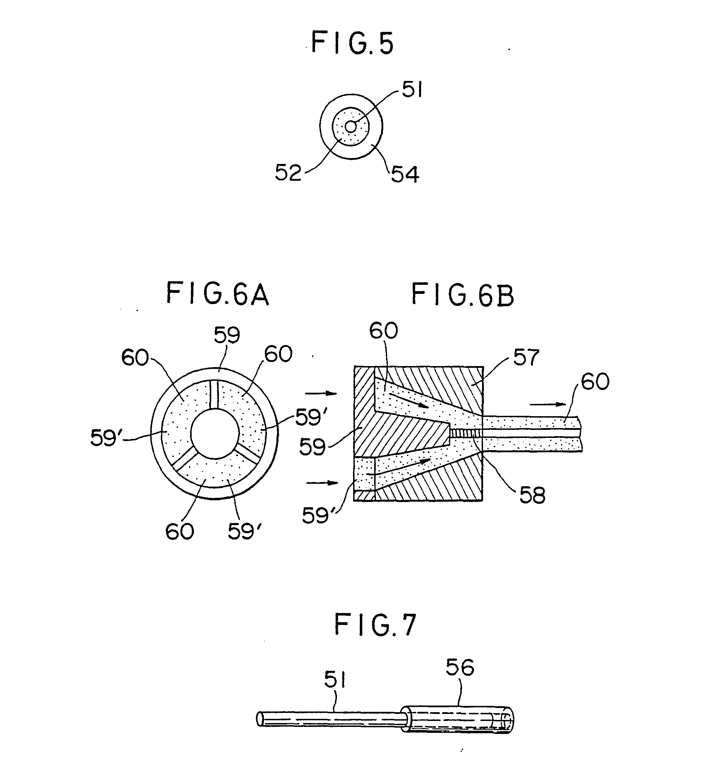

Another positioning process uses a stereomicroscope for observing the tip of the machining electrode and the workpiece while positioning them relatively to each other. Such a process is known from Philips' Technical Review, Vol. 30, No. 617, 1969 — Fig. 7, pp.201-2. This positioning process however also fails to effect accurate positioning because of the parallax since the workpiece is obliquely observed.

According to the present invention there is provided an electrical discharge machining apparatus for forming a minute hole in a workpiece, including a machining electrode for forming the minute hole by electrical discharge, means to move the electrode towards and away from the workpiece, a table on which the workpiece is to be located, means for adjusting the workpiece position and workpiece position sensing means for sensing marked positions on the workpiece characterised in that the table is movable between first and second positions respectively associated with the electrode and with the position sensing means, in that stop means are provided for defining the first and second positions by limiting movement of the table, and in that the position sensing means are movable so that when the table is in the second position the position sensing means may be used for detecting, and moving to a position corresponding to, a position marked on the workpiece by the electrode when the table was in the first position, so as to be in a fixed relation to the electrode position, and in that the means for adjusting the workpiece position are arranged so as to be able to adjust the workpiece position without altering the movement which the table makes in travelling between the first and second positions, such that a part of the workpiece sensed by the position sensing means when the table is in the second position and the position sensing means are in said fixed relation can, on movement of the table from the second position to the first position, be brought into register with the electrode.

With the invention a number of the drawbacks of the conventional EDM apparatus can be eliminated. In one embodiment the invention provides an electrical discharge machining apparatus for forming minute holes in a workpiece, which requires no spindle construction, has a light and small-size electrode assembly, has an electrode support electrically insulated from the other parts for greatly reducing a stray capacity, and hence is capable of forming minute holes of small surface roughness and out-of-roundness and diameters ranging from 10 to 200 micrometers at high machining speeds.

The invention can also reduce or eliminate the effects of parallax and thus allow a thin machining electrode to be positioned relatively to a workpiece with high accuracy.

An embodiment of the present invention may also provide an electrical discharge machining apparatus for forming minute holes in a workpiece, which has a support tube supporting an electrode core wire and a rotatable support body, the support tube and the rotatable support body having a central axis and a center of rotation which are aligned with each other highly accurately for preventing the electrode from wobbling movement or displacement during rotation thereof, so that minute holes of small out-of-roundness and good accuracy of shape can be formed in a workpiece.

A machine according to the present invention may also include an electrical discharge machining electrode for forming minute holes, which can be fed out of a rotatable support body as the electrode is progressively consumed by electrical discharges, so that the electrode can be used for a long period of time and the machining electrode may be manufactured from a commercially available thin core wire and may be adapted to allow easy removal of machined chips produced upon electrical discharge machining for an increased machining speed.

The machining electrode may be composed of an electrode core wire slidably supported in a support tube having an outer periphery and a bore in which the electrode core wire is inserted, the outer periphery and the hole being in highly concentric relation to each other. The support tube is coupled to a rotatable support body by which rotative power is transmitted to the support tube, with their axes of rotation in alignment with each other. The machining electrode is supported by a support means having V-shaped grooves and will be rotated at a constant speed while an electrical discharge is produced between the machining electrode and the workpiece. The machining position can be established by piercing a minute hole in the workpiece at any desired position, moving the workpiece to the position below the positioning means to bring the pierced minute hole into alignment with a prescribed position in the field of view of a microscope so that the positions directly below the machining electrode and the microscope will be in conjugate relationship, then setting a position in which to machine the workpiece at the prescribed position in the field of view of the microscope, and thereafter returning the workpiece to the position directly below the machining electrode.

The present invention will be described in detail by way of illustrative example with reference to the accompanying drawings, in which;

FIG. 1 is a perspective view of an electrical discharge machining apparatus for forming minute holes in a workpiece according to the present invention;

FIG. 2 is a perspective view of a machining head in the electrical discharge machining apparatus of FIG. 1;

FIG. 3 is a perspective view of a machining electrode used in the electrical discharge machining apparatus;

FIG. 4 is a longitudinal cross-sectional view of the machining electrode shown in FIG. 3;

FIG. 5 is a front elevational view of the machining electrode shown in FIG. 3;

FIGS. 6A and 6B are side elevational and cross-sectional views of a die for fabricating a wire guide for the machining electrode;

FIG. 7 is a perspective view of an electrode core wire in the machining electrode;

FIGS. 8A, 8B, and 8C are plan, front elevational, and perspective views of a support for the machining electrode;

FIG. 9 is a schematic side elevational view, partly in cross section, of a machining electrode moving mechanism in the electrical discharge machining apparatus;

FIG. 10 is a fragmentary side elevational view of the machining head;

FIG. 11 is an exploded perspective view of a fine adjustment mechanism for positioning a workpiece in the electrical discharge machining apparatus;

FIG. 12 is a perspective view of a workpiece moving mechanism in the electrical discharge machining apparatus;

FIG. 13 is a circuit diagram, partly in block form, of a circuit arrangement for an electrical discharge unit and the machining electrode moving mechanism in the electrical discharge machining apparatus;

FIG. 14 is a perspective view of a machining electrode according to another embodiment of the present invention;

FIG. 15 is a fragmentary longitudinal cross-sectional view of the machining electrode shown in FIG. 14;

FIGS. 16A, 16B, and 17 are views illustrative of a process of assembling a wire guide and a mandrel of the machining electrodes of the present invention;

FIG. 18 is a transverse cross-sectional view of a machining electrode according to still another embodiment of the present invention;

FIGS. 19 and 20 are side-elevational views, partly in cross section, showing the manner in which machining electrodes of still further embodiments are used;

FIGS. 21A and 21B are plan and front elevational views of a machining electrode support according to a still further embodiment of the present invention;

FIG. 21C is a cross-sectional view of a protruding member in the machining electrode support illustrated in FIGS. 21A and 21B;

FIGS. 22A and 22B are diagrams illustrative of an angular error caused at the time a number of holes are formed by the electrical discharge machining apparatus of the present invention; and

FIGS. 23A and 23B are diagrams explanatory of a process of positioning a workpiece when a number of holes are formed by the electrical discharge machining apparatus of the present invention.

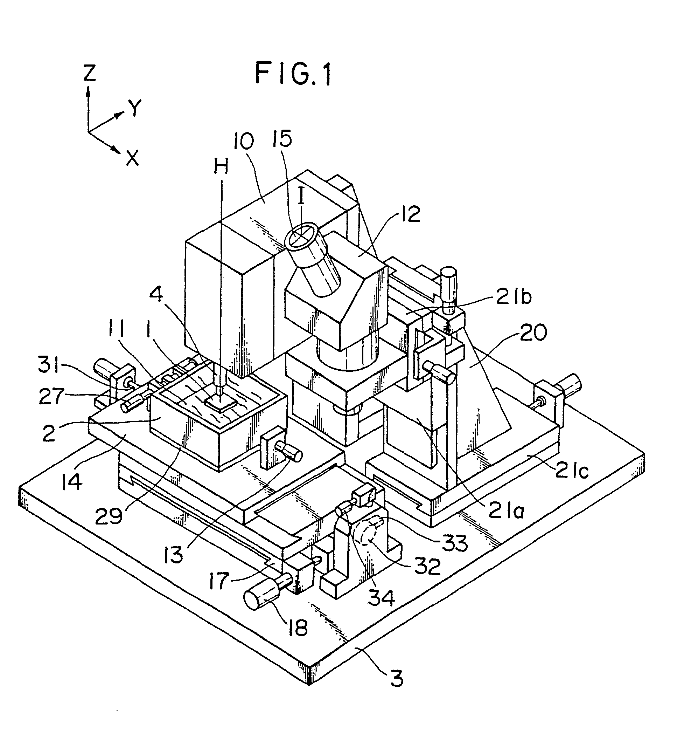

FIG. 1 shows an overall arrangement of an electrical discharge machining (EDM) apparatus for forming minute holes in a workpiece according to the present invention.

The electrical discharge machining apparatus includes a machining electrode 4 and a machining head 10 supporting the machining electrode 4. A workpiece 1 is placed on a support base 11 disposed in a machining bath 2. As the machining electrode 4 is moved toward the workpiece 1 while rotating the machining electrode 4, an electrical discharge is initiated between the machining electrode 4 and the workpiece 1. A minute hole can be formed in the workpiece 1 by successively feeding the machining electrode 4 toward the workpiece 1.

The EDM apparatus also includes a positioning microscope 12 movable in three directions, that is, X and Y directions extending parallel to a base 3 and perpendicularly to each other, and a Z direction extending perpendicularly to the base 3 and the X and Y directions.

The machining bath 2 can be fed in the X direction by sliding a slide plate 29 of the bath 2 on a slide table 14 with a fine adjustment screw 13. The machining bath 2 can be angularly adjusted in an X-Y plane with a fine adjustment screw 27. The slide table 14 can be moved in the X direction until it abuts against stoppers 31, 32. When the slide plate 14 is fixed in abutment against the stopper 31, the workpiece 1 is positioned directly below the machining electrode 4. When the slide plate 14 is fixed in abutment against the stopper 32, the workpiece 1 is positioned directly below the microscope 12. An eccentric cam 33 is angularly movable by a lever 34 as described later on. A table 17 movable in the Y direction is disposed beneath the slide table 14 and can be moved by a feed screw 18. The machining bath 2, the slide table 14, and the table 17 jointly constitute a support base assembly. The machining head 10, the microscope 12, and the support base assembly are mounted individually on the base 3.

The microscope 12 is mounted on a holder having a slide mechanism having three slides. More specifically, a slide 21a extends in a direction perpendicular to the workpiece 1 or the Z direction for adjusting the focus of the microscope 12. The slide 21a can be replaced with a mechanism for moving an objective lens of the microscope upwardly and downwardly. A slide 21b serves to move the microscope 12 in the same direction as that of movement of the slide table 14, or the X direction. A slide 21c serves to move the microscope 12 in a direction, or the Y direction, normal to the direction in which the slide table 14 moves. The microscope 12 has an eyepiece bearing cross hairs 15 which will appear in the field of view of the viewer, the intersection of the cross hairs 15 serving as a sight.

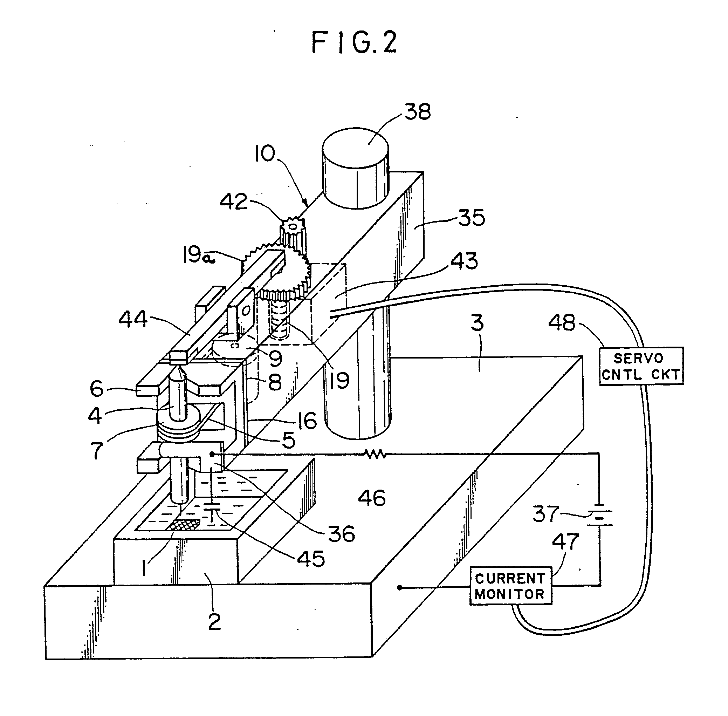

FIG. 2 shows the machining head 10 in greater detail. The machining electrode 4 is rotatably supported by a support or bearing 6 having V-shaped grooves, and will be rotated by a belt 5 trained around a pulley 7 on the machining electrode 4 and a pulley 9 on a motor 8, while at the same time the machining electrode 4 is held against the bearing 6. Since the pulley 9 is located upwardly of the pulley 7, the machining electrode 4 is biased to move upwardly under the tension of the belt 5 while being rotated by the motor 8. The machining electrode 4, the bearing 6, and the pulley 7 jointly constitute an electrode assembly electrically insulated by an insulator 16 as of ceramics from a body 35 of the machining head 10. The electrode assembly is electrically connected to a DC power supply 37 by means of a brush 36.

The machining electrode 4 can be fed selectively in two modes, that is, rough feeding and fine feeding. In the rough feeding mode, the body 35 is vertically slid along a post 38 on the base 3 to bring the machining electrode 4 together with the body 35 to a position near the workpiece 1 disposed in the machining bath 12. Thereafter, in the fine feeding mode, a pinion gear 42 is rotated by a motor 43 to rotate a gear 19a integral with a feed screw 19 for thereby vertically moving the feed screw 19, causing a pivot lever 44 to move the machining electrode 4 for a small vertical interval.

A machining circuit is composed of the DC power supply 37, a capacitor 45, and a resistor 36 through which the brush 36 is connected to the DC power supply 37. A machining current flowing through the machining circuit is detected by a current monitor 47 and utilized for enabling a servo control circuit 47 to control the speed and direction of rotation of the motor 43 for controlling the speed and direction of fine feeding movement of the machining electrode 4. When an ordinary electrical discharge is generated between the machining electrode 4 and the workpiece 1, the motor 43 is rotated counterclockwise at a prescribed constant speed to feed the machining electrode 4 at a predetermined speed toward the workpiece 1. When the machining electrode 4 and the workpiece 1 in the machining bath 2 are short-circuited, the current monitor 47 detects a short-circuiting current and causes the servo control circuit 48 to rotate the motor 43 clockwise at a high speed for moving the machining electrode 4 away from the workpiece 1 at a high speed. After the short circuit has been eliminated, the motor 43 is rotated counterclockwise again to feed the machining electrode 4 at the prescribed speed toward the workpiece 1. The workpiece 1 is progressively machined while the above cycle of operation is repeated.

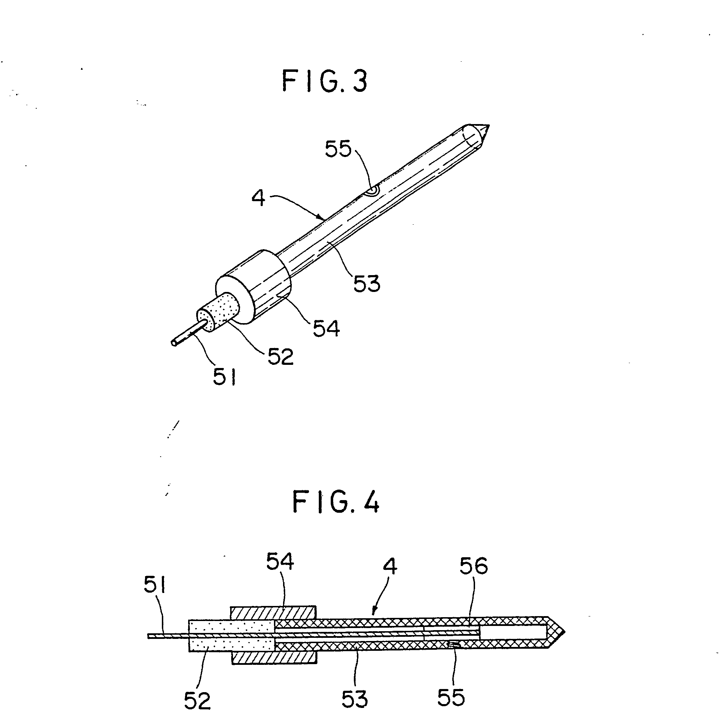

FIGS. 3 through 5 illustrate the machining electrode 4.

The machining electrode 4 is constructed of a thin electrode core wire 51 slidably guided in a wire guide or support tube 52 made of ceramics which is attached by a guide sleeve or tube 54 to a metal mandrel or rotatable support body 53. The wire 51 has an end connected to a pipe 56 made of an electrically conductive material and fixedly mounted in the mandrel 53 by means of a metal screw 55. As shown in FIG. 4, the wire guide 52 is fitted in the guide sleeve 54 with a clearance of 2 micrometers or smaller therebetween. The mandrel 53 is fitted in the guide sleeve 54 with a clearance as defined in JIS (Japanese Industrial Standards) h6 - P6.

According to the above embodiment, the wire guide 52 comprises a ceramic pipe originally manufactured fur use as an optical fiber connector core, and the electrode core wire 51 is fitted therein with a clearance of 1 micrometer or less. The wire guide 52 has an outer peripheral surface and a bore which are concentric with each other with an error of 1 micrometer or less. The bore of the guide sleeve 54 is finished by lapping so that the inside diameter thereof differs from the outside diameter of the wire guide 52 by the range of 0 to 2 micrometers. The mandrel 53 is disposed in the guide sleeve 54 with a close fit having a clearance as defined in JIS h6 - P6. Since the wire guide 52 is supported by the guide sleeve 54 with the outer peripheral surface of the mandrel 53 serving as a positioning reference, the machining electrode 4 is of high accuracy with the wire 51 displaceable to 4 micrometers at maximum.

A method of manufacturing the wire guide 52 with an error of concentricity between the outer peripheral surface and bore thereof being 1 micrometer or smaller will now be described with reference to FIGS. 6A and 6B.

Where the wire guide 52 is made of a sintered material such as ceramics, the wire guide 52 can be fabricated by vacuum extrusion molding. FIGS. 6A and 6B show a die used in vacuum extrusion molding. The die is composed of an outlet piece 57, a pin 58, and a pin holder 59 in which an end of the pin 58 is embedded. A kneaded mass 60 of ceramics is fed in the direction of the arrows to the right (as shown in FIG. 6B) through gaps 59' in the pin holder 59 into the outlet piece 57. The kneaded ceramic mass 60 is then extruded out of the die in the form of a pipe by means of the pin 58 and the outlet piece 57. Through increased accuracies of the combined pin 58 and the outlet piece 57, the error of concentricity between the bore and outer peripheral surface of the extruded ceramic pipe becomes 10 micrometers or smaller. After the extruded ceramic pipe has been subjected to firing, a wire is threaded through the bore of the ceramic pipe and the outer peripheral surface is cylindrically ground by a centerless grinder with the wire serving as a guide, thus producing a high-precision wire guide 52 having a concentricity error of 3 micrometers or smaller.

In producing pipes through extrusion molding, no manufacturing problem arises out of the fact that the outside diameter of the pipe becomes large with respect to the diameter of the bore therein, or the bore is enlarged.

The guide sleeve 54 may be machined by various processes such as lapping or honing since only the bore in the guide sleeve 54 in which the wire guide 52 is fitted should meet the prescribed dimensional tolerance. It is easy to keep the dimensions of the guide sleeve 54 within the tolerance ranging from 0 to 2 micrometers.

A fit as prescribed by JIS h6 - P6 can easily be achieved between the mandrel 53 and the guide sleeve 54 simply by grinding the outer peripheral surface of the guide sleeve 54 with a cylindrical grinding machine.

In order to hold the thin wire 51 serving as the machining electrode highly linearly within the mandrel 53 and also to provide electric conductivity between the wire 51 and the mandrel 53, a pipe 56 is staked or soldered or otherwise connected to a rear end of the wire 51, as shown in FIG. 7, and then is secured to the mandrel 53 by a metal setscrew 55, as illustrated in FIG. 4. The wire guide 52 is fitted in the mandrel 53 with a clearance as prescribed by JIS h6 - H7.

The wire guide 52 may be made of ruby, sintered metal, cemented carbide, for example, other than ceramics. The pipe 56 may be made of any electrically conductive materials. The guide sleeve 54 may also be made of ruby, sintered metal, ordinary metal, for example, other than ceramics. According to the present embodiment, the clearance between the wire 51 and the wire guide 52 is on the order of 1 micron and hence is negligible.

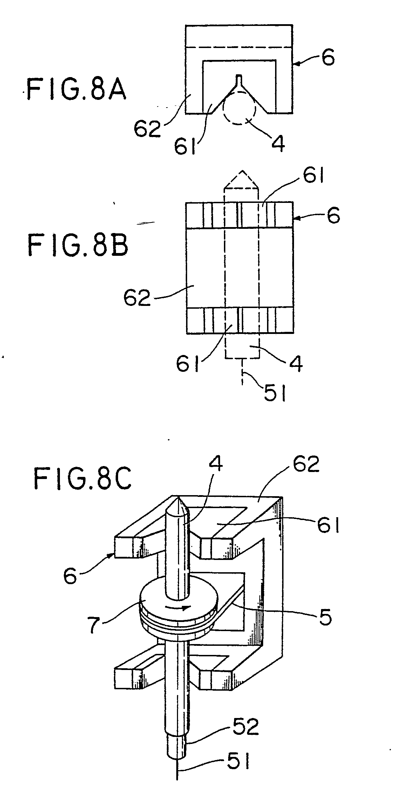

FIGS. 8A, 8B, and 8C illustrate the bearing 6 in detail. The bearing 6 is composed of two upper and lower V-grooved members 61 attached to a support body 62 and having V-shaped grooves or notches in which the machining electrode 4 is disposed and held against the V-grooved members 61. The V-grooved members 61 are made of ruby in the illustrated embodiment, but may also be made of hard metal, sapphire, diamond, quenched steel, or other wear-resistant materials. The V-grooved members 61 and the support body 62 may be of an integral construction of the same material. Each of the V-shaped grooves should preferably flare at an angle rangeing from 30° to 150°.

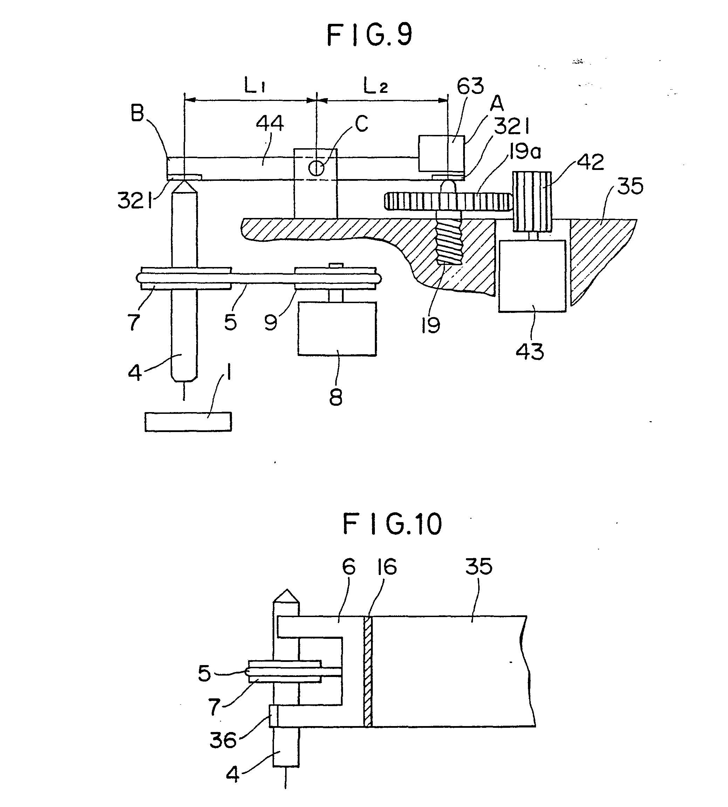

FIG. 9 illustrates the fine feed mechanism in greater detail. The lever 44 is pivotally supported by a pivot C. The machining electrode 4 and the feed screw 19 have semispherial or conical ends held pivotally against contact members 321 on the lever 44 which are made of a highly wear-resistant material. The contact members 321 are in the form of sapphire blocks in the illustrated embodiment, but may be made of ruby, diamond, ultra high strength steel, or quenched steel, for example.

The feed screw 19 has an externally threaded lower portion threaded in an internally threaded hole in the body 35. Upon rotation of the motor 43, the pinion 42 and the gear 19a meshing therewith are rotated to cause the feed screw 19 to move vertically as the gear 19a meshingly engages the pinion 42 at different positions. The vertical movement of the feed screw 19 is transmitted through the lever 44 to the machining electrode 4 which is then fed in its axial direction.

In the present embodiment, the feed gear 19a and the pinion 42 have a gear ratio of 5 : 1, the external threads on the feed screw 19 comprise lefthand screw threads having a pitch of 0.5 mm, and the pinion 42 has a teeth length of 10 mm. When the motor 43 rotates counterclockwise, the feed screw 19 is rotated clockwise at a speed which is 1/5 of the speed of rotation of the motor 43, and is moved upwardly by a distance of 0.1 mm per revolution of the motor 43. The maximum distance the feed screw 19 can move vertically is determined by the teeth length of the pinion 42. As a result, an end A of the lever 44 which contacts the feed screw 19 is lifted upwardly by a distance of 0.1 mm. With the lever 44 having a leverage

$$L_1 : L_2 = 1 : 1$$

in the illustrated embodiment, an end B of the lever 44 opposite to the end A is depressed by a distance of 0.1 mm.

The machining electrode 4 is operatively connected to the motor 8 by the pulleys 7, 9 and the belt 5. Since the machining electrode 4 is normally biased upwardly by the belt 5, the machining electrode 4 is held in contact with the lever 44 at all times. Accordingly, the vertical displacement of the lever end A is equal to the distance the machining electrode 4 is fed vertically. The foregoing mode of operation is effected when a stable electrical discharge is produced. When the workpiece 1 and the machining electrode 4 are short-circuited, the motor 43 is rotated clockwise to lift the machining electrode 4 off the workpiece 1. The tension of the belt 5 can be reduced by a weight 63 attached to the end A of the lever 44.

FIG. 10 shows the manner in which the bearing 6 is electrically insulated for reducing any stray capacity and the brush 36 is in contact with the machining electrode 4. The body 35, and the machining electrode 4 and the bearing 6 are electrically insulated by the insulator 16 which is made of ceramics, paper, vinyl, or glass, for example. The machining electrode 4 and the machining power supply are held in electric contact directly by means of the brush 36. This arrangement allows the discharge circuit small in size to reduce any stray capacity which would influence electrical discharge machining.

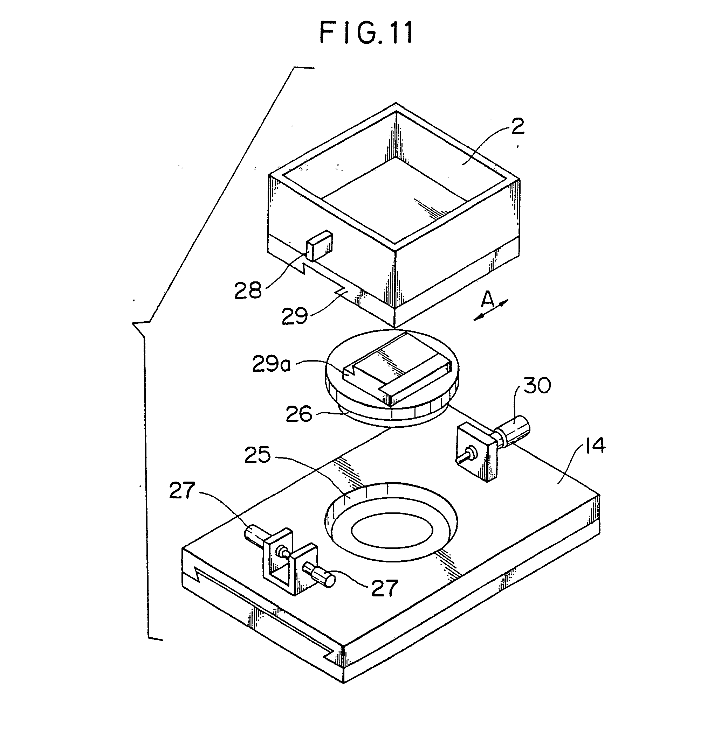

The machining bath 2 and the slide table 14 are illustrated in greater detail in FIG. 11.

A rotatable slide 26 is mounted on the underside of the machining bath 2 and has a cylindrical portion slidably fitted in a hole 25 defined in an upper surface of the slide table 14. By pushing a projection 28 on the machining bath 2 with the adjustment screw 27, the machining bath 2 is angularly moved through a small angle about its center through the slidable fitting engagement between the slide 26 and the slide table 14. A ball bearing may be disposed between the slide 26 and the slide table 14 instead of fitting engagement therebetween. The machining bath 2 is movable in the direction of the arrow A (corresponding to the X direction in FIG. 1) by the slide plate 29 attached to the underside of the machining bath 2 and guided by a guide 29a on the slide 26. The distance that the machining bath 2 is moved in the A direction can be adjusted by a feed screw 30.

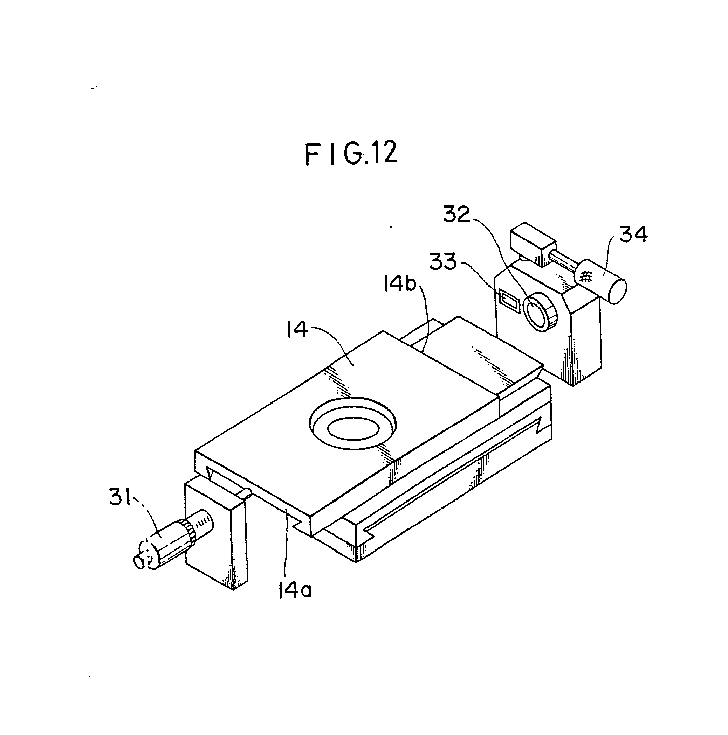

FIG. 12 shows the stoppers 31, 32 for the slide table 14. The stopper 31 disposed on the lefthand side (as shown) of the slide table 14 comprises a micrometer head, while the stopper 32 on the righthand side of the slide table 14 comprises a permanent magnet having a ground end surface. The slide table 14 can be positioned at a lefthand limit position by pressing a lefthand end 14a of the slide table 14 against the micrometer-head stopper 31 with a spring (not shown) disposed within the slide table 14, and at a righthand limit position by magnetically attracting a righthand end 14b of the slide table 14 to the end surface of the magnetic stopper 32. The slide table 14 which has been attracted to the magnetic stopper 32 can be disengaged therefrom in one operation by angularly moving the eccentric cam 33 with the lever 34. The released slide table 14 is then pressed at its lefthand end 14a against the micrometer-head stopper 31 under the tension of the spring in the slide table 14, whereupon the machining electrode 4 of the machining head 10 is held in confronting relation to the workpiece 1 in the machining bath 2.

Operation of the EDM apparatus thus constructed for forming a minute hole in the workpiece 1 will be described with reference to FIG. 1.

The workpiece 1 is placed in the machining bath 2 filled with an insulative machining solution such as illuminating kerosene. The workpiece 1 may roughly be positioned at this time. Then, the slide table 14 is moved into abutment against the lefthand stopper 31 and stopped. The workpiece 1 is now positioned substantially below the machining electrode 4. The machining electrode 4 is rotated and lowered against the workpiece 1 to form a marking hole in the workpiece 1. The marking hole may be of a size which can be visually recognized.

Then, the machining electrode 4 is raised, and the slide table 14 is moved into abutting engagement with the righthand stopper 32 and stopped there under magnetic forces of the stopper 32. At this time, the workpiece 1 is disposed substantially below the microscope 12. The microscope 12 is then moved by the slides 21a, 21b, 21c attached to the holder 20 for focusing adjustment until the crossing point, serving as the sight, of the cross hairs 15 in the field of view of the microscope 12 is aligned with the center of the marking hole in the workpiece 1. With such adjustment, the position H (FIG. 1) of the machining electrode 4 and the crossing point I of the cross hairs 15 of the microscope 12 are brought into a conjugate relationship through the movement of the slide table 14. The term "conjugate relationship" used herein means the condition in which when the slide table 14 is moved into engagement with the stoppers 31, 32, a desired position on the workpiece 1 in which to form a hole and which is established by the crossing point I of the cross hairs 15 under the microscope 12 coincides with the position of the hole which will actually be formed by the machining electrode 4 at all times. Accordingly, once such a conjugate relationship is established, any desired position on the workpiece 1 which is to be perforated will be positioned directly below the machining electrode 4 by first bringing such a desired position on the workpiece 1 into alignment with the crossing point I of the cross hairs 15 under the microscope 12 and then moving the slide table 14 into abutment against the stopper 31 and stopping the slide table 14 there.

The manner in which a desired position on the workpiece 1 to be perforated is aligned with the crossing point I of the cross hairs 15 in the field of view of the microscope 15 will be described hereinbelow.

After the conjugate relationship has been established between the machining electrode position H and the crossing point position I, the slide table 14 is fixed in abutment against the stopper 32. Then, the workpiece 1 is moved by sliding the slide 14 in the Y direction and the slide 29 in the X direction with the feed screws 18, 13 so that the desired position to be machined will be aligned with the center I of the cross hairs 15. Since the feed screws 18, 13 comprise micrometer heads having a lead of 0.5 mm in the illustrated embodiment, such positioning adjustment can be carried out easily and highly accurately. In this adjustment, the slide table 14 is moved in the Y direction by reason of being mounted on the slide 17 which is movable only in the Y direction. However, due to the slide table 14 and the slide 17 being movable in mutually perpendicular directions, the conjugate relationship established between the crossing point position I on the microscope 12 and the machining electrode position H is not impaired at all by movement of slide 14 by reason of movement of slide 17.

After the above positioning adjustment has been effected, the slide table 14 is moved again into abutment against the stopper 31. The desired position on the workpiece 1 to be perforated is now positioned directly below the machining electrode 4 with accuracy since the conjugate relationship has already been established by previously positioning the slide table 14 in engagement with the stoppers 31, 32. The workpiece 1 can then be machined to form a minute hole in the desired position by lowering the energized machining electrode 4 while rotating the same. As described above, once the conjugate relationship has been established, no further positioning adjustment is necessary in successive cycles of machining operation.

When the wire 1 is consumed as the machining proceeds, the setscrew 55 is loosened, the wire 1 is allowed to drop by gravity or pulled out by forceps, and then fixed in position by the screw 55 for further machining operation.

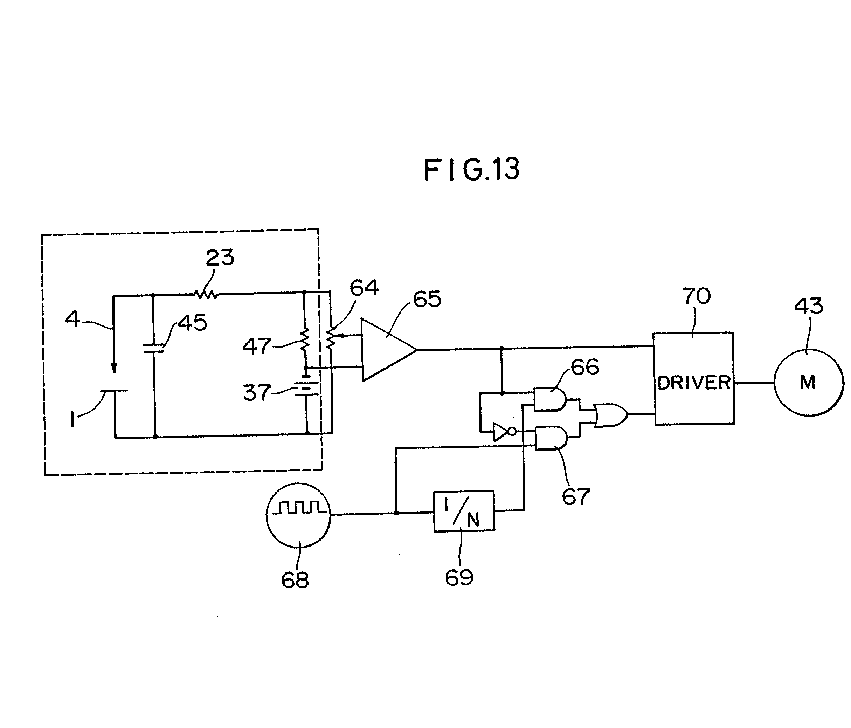

FIG. 13 schematically illustrates a motor control circuit in which a stepping motor is used for feeding the machining electrode 4 toward the workpiece 1, and also shows an electrical discharge machining circuit. A portion enclosed by a dotted line is the electrical discharge machining circuit, while the remainder serves as the motor control circuit corresponding to the servo control circuit 48 shown in FIG. 2. Denoted at 4 is the machining electrode, 1 the workpiece, 45 the capacitor, 23 the resistor, and 37 the power supply. The motor control circuit includes a reference voltage detecting resistor 64, a comparator 65 for comparing voltages generated by the resistors 47, 64, an AND gate 66 for rotating the motor 43 at a low speed, an AND gate 67 for reversing the motor at a high speed on short-circuiting, an oscillator 68 for generating a reference rotation signal, a 1/N counter 69, and a driver amplifier 70 for driving the motor 43.

During a normal electrical discharge, the reference rotation signal is frequency-divided by the 1/N counter 69. A signal from the 1/N counter 69 is applied through the AND gate 66 to the driver amplifier 70 for rotating the motor 43 at a constant low speed. When the machining electrode 4 and the workpiece 1 are short-circuited to cause the comparator 65 to produce a short-circuit signal, the signal from the oscillator 68 goes through the AND gate 67 to the driver amplifier 70 which rotates the motor 43 at a high speed in the opposite direction.

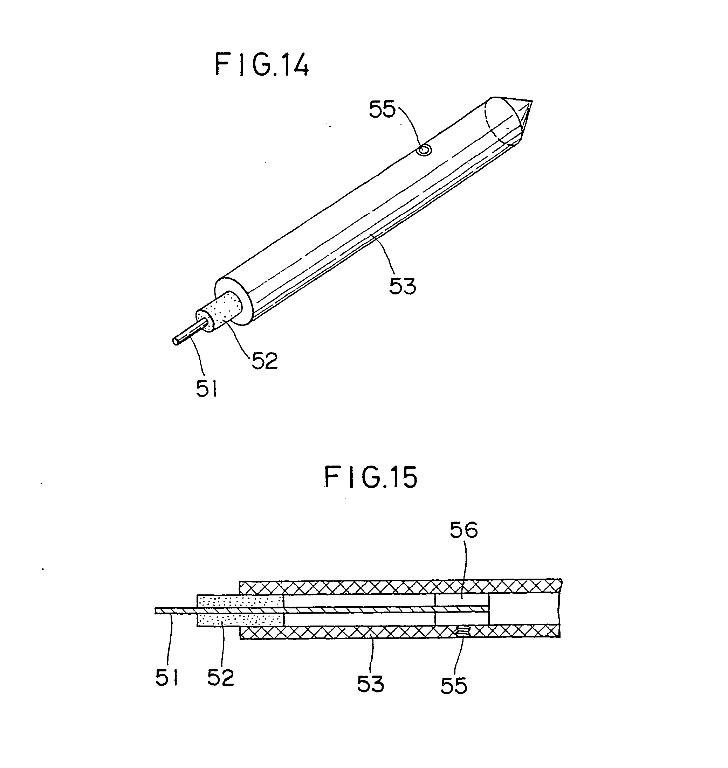

FIGS. 14 and 15 are illustrative of a machining electrode which may be used with the present invention in which the mandrel 53 and the guide sleeve 54 in the embodiment of FIGS. 3 and 4 are integrally formed of the same material.

A thin electrode core wire 51 is guided by a wire guide or support tube 52 of ceramics which is disposed in and attached to a mandrel or rotatable support body 53 made of metal such as quenched steel. The wire guide 52 is fitted in the mandrel 53, as shown in FIG. 15, with a clearance as prescribed by JIS h6 - P6. The wire guide 52 is composed of a ceramics pipe for use as an optical fiber connector, with the error of concentricity between the outer peripheral surface and the bore being 1 micrometer or less. The mandrel 53 is machined to render its outer peripheral surface and bore concentric with each other, with a concentricity error being 1 micrometer or smaller. The wire guide 52 is fitted in the mandrel 53 in a manner to reduce any possible diplacement of the electrode core wire 51 to a minimum. The distance that the wire guide 52 is inserted longitudinally in the mandrel 53 is sufficiently larger as compared with the diameter of the wire guide 52, so that the wire guide 52 will not be tilted appreciably with respect to the longitudinal axis thereof. As a result, the electrode core wire 51 is subjected to only a greatly reduced displacement.

Where the wire guide 52 has an outside diameter of 2.5 mm or larger, the mandrel 53 may be bored in an ordinary manner, such for example as by being drilled and then finished with a reamer. Since the tool used is of a sufficient rigidity, the bore formed in the mandrel and the outer peripheral surface thereof can be concentric with each other with a concentricity error of a few micrometers.

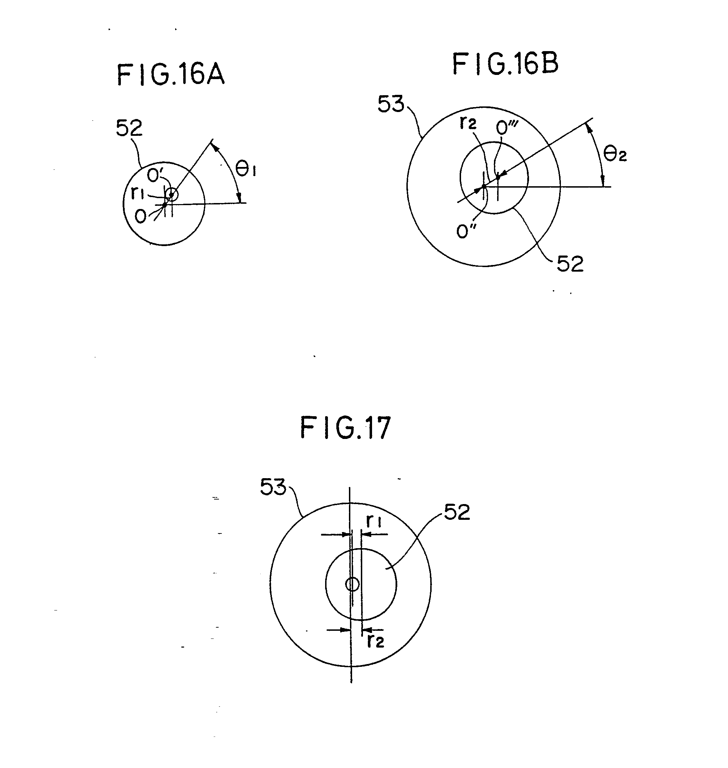

A process of fitting the wire guide 52 in the mandrel 53 in a manner to minimize any possible displacement of the electrode core wire 51 will be described with reference to FIGS. 16A, 16B, and 17. FIG. 16A illustrates the positional relationship between the bore and outer peripheral surface of the wire guide 52, and FIG. 16B shows the positional relationship between the bore and outer peripheral surface of the mandrel 53. As shown in FIG. 16A, the center O' of the bore in the wire guide 52 is radially displaced $r_1$ from the center O of the circular outer peripheral surface of the wire guide 52 at an angular position $\theta_1$. As illustrated in FIG. 16B, the center O''' of the bore in the mandrel 53 is radially displaced $r_2$ from the center O'' of the circular outer peripheral surface of the mandrel 53 at an angular position $\theta_2$.

When combining the wire guide 52 and the mandrel 53 together in fitting engagement with each other, the mandrel 53 is angularly moved clockwise about its own axis through an angle of $\theta_2$ in FIG. 16B, and the wire guide 52 is angularly moved counterclockwise about its own axis through an angle of $180° - \theta_1$. The resulting relative angular positional relationship between the wire guide 52 and the mandrel 53 is illustrated in FIG. 17. More specifically, the error of concentricity R between the bore in the wire guide 52 and the outer peripheral surface of the mandrel 53 can be expressed by the following equation:

$$R = r_2 - r_1$$

As a consequence, the concentricity of the bore in the wire guide 52 fitted in the mandrel 53 with respect to the outer peripheral surface of the mandrel 53 is better than the concentricity of the bore in the wire guide 52 with respect to the outer peripheral surface thereof. The machining electrode with no substantial core wire displacement can therefore be achieved by combining the wire guide 52 and the mandrel 53 which have bore concentricity errors of a few micrometers.

In an actual assembling procedure, a tool microscope having a magnification of 800x is used to determine concentricity errors of the bores in the wire guide 52 and the mandrel 53, and the angular positions $\theta_1$, $\theta_2$ to determine a relative angular position in which to assemble the wire guide 52 and the mandrel 53, followed by forcing the wire guide 52 into the mandrel 53 in the determined relative angular position.

With the above machining electrode construction, the bore in the wire guide 52 and the guide sleeve 54 or the mandrel 53 have a concentricity error of 2 microns or less, which substantially prevents the electrode core wire 51 from being displaced during electrical discharge machining so that a minute hole can be formed which has quite small out-of-roundness and reduced surface roughness.

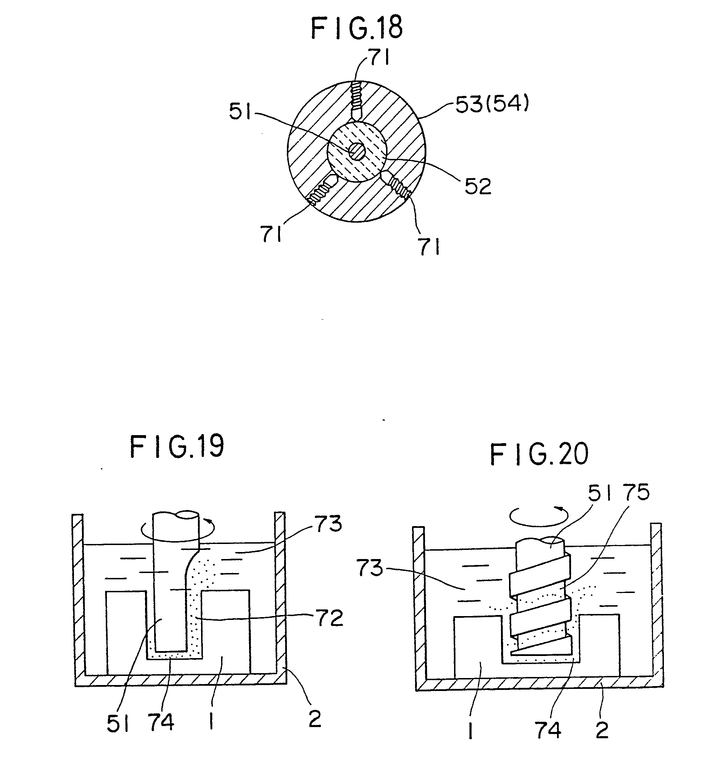

When it is necessary to make the concentricity error smaller, the position of the wire guide 52 with respect to the guide sleeve 54 or the mandrel 53 may be adjusted in the radial direction as shown in FIG. 18. More specifically, the guide sleeve 54 or the mandrel 53 surrounding the wire guide 52 has three radial adjustment screws 71 threadedly disposed therein at about 120°-spaced intervals and having tip ends positionable in contact with the outer peripheral surface of the wire guide 52. By adjusting the adjustment screws 71 while observing the position of the wire guide 52 as with a microscope, the wire guide 52 can be positioned into highly concentric relation to the guide sleeve 54 or the mandrel 53.

FIGS. 19 and 20 illustrate machining electrodes having chip discharge passages according to further embodiments of the present invention. In FIG. 19, an electrode core wire 51 has a recess 72 extending upwardly from a tip thereof. The workpiece 1 is immersed in an insulative oil 73 such as illuminating kerosene in the machining bath 2. During an initial stage of machining of the workpiece 1 by an electrical discharge between the wire 51 and the workpiece 1, chips 74 produced from the machined workpiece 1 can easily find their way into the oil 73. When the wire 54 is moved downwardly as the machining process proceeds, chips 74 are discharged through the recess 72 serving as a chip discharge passage into the oil 73. As a result, there is no danger of short-circuiting between the wire 51 and the workpiece 1 or of a secondary electrical discharge produced between the wire 51 and the chips 74 or the workpiece 1 and the chips 74, and the speed at which the workpiece 1 is machined can be increased. According to the embodiment of FIG. 20, a machining electrode core wire 51 has a chip discharge passage in the form of a helical groove 75 for allowing chips 74 from the workpiece 1 to be discharged along the helical groove 75 into the oil 73.

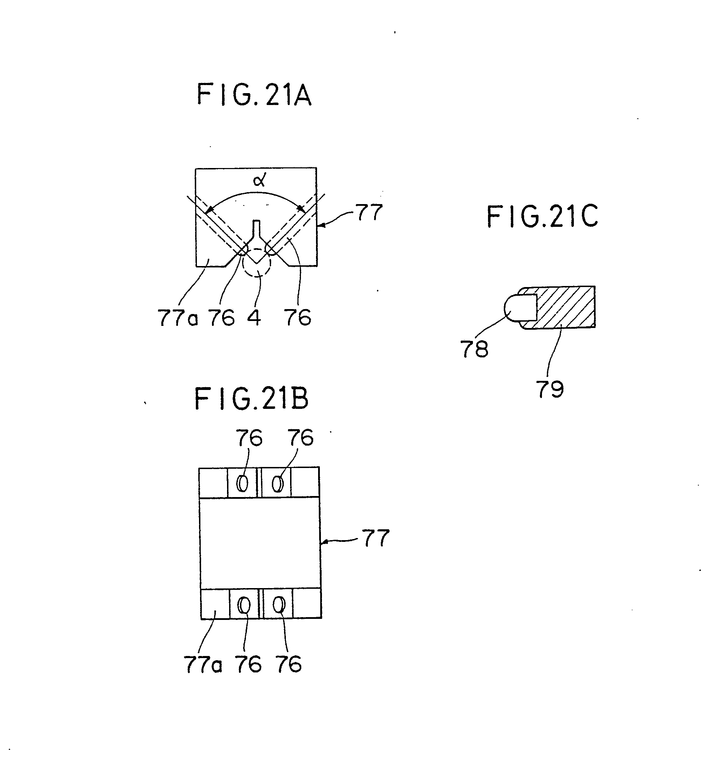

FIGS. 21A, 21B, and 21C show a support or bearing 77 according to a still further embodiment of the invention for supporting the machining electrode 4 through a pivot bearing construction. The bearing 77 has upper and lower V-grooved or notched members 77a each accommodating two protruding members 76 having semispherical distal ends projecting on surfaces defining the V-shaped groove. The machining electrode 4 is therefore supported by the four protruding members 76. Each V-shaped groove should preferably have an opening angle $\alpha$ in the range of from 30° to 150°. As shown in FIG. 21C, the protruding member 76 has a semispherical member 78 and a cover body 79 in which the semispherical member 78 is partly embedded. The cover body 79 is threaded or fitted in a hole defined in the V-grooved member 77a. The semispherical member 78 is made of ruby in the illustrated embodiment, but may also be made of a highly wear-resistant material. The member 78 may be flat at the distal end.

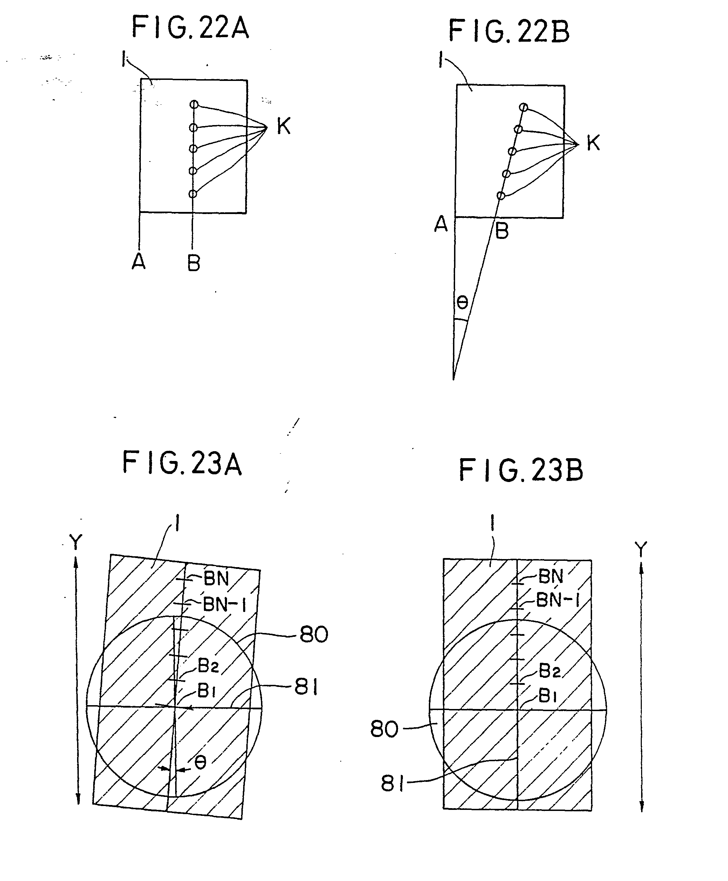

A mode of operation of the electrical discharge machining apparatus in which a number of holes are formed in a workpiece will be described with reference to FIGS 22A, 22B, 23A, and 23B.

FIG. 22A illustrates a workpiece 1 with a number of holes formed therein along a straight line. For forming a number of such holes K along a straight line in a workpiece, it should generally be questioned how parallel are a reference line A and a line B connecting the centers of the holes K and intended to be parallel to the line A. Stated otherwise, the angle $\theta$ (FIG. 22B) formed between the reference line A and the line B should be as small as possible.

Such desired parallelism between the line A and the line B can be achieved in the following manner: The machining electrode position H and the microscope position I (FIG. 1) are first brought into conjugate relationship, and then the center of a desired position BI on the workpiece which is to be perforated is aligned with the crossing point of cross hairs 81 in a field of view 80 of the microscope, as shown in FIG. 23A. In such a condition, the slide 17 (FIG. 1) is moved in the Y direction by means of the feed screw 18 to observe desired positions B2 through BN succesively with the microscope 12. If the straight line along which holes are to be formed in the workpiece 1 is not parallel to the Y direction in which the slide 17 is fed, e.g. is inclined to the Y direction through an angle of $\theta$, then the desired machining positions B2 through BN will be seen progressively deviated from the crossing point of the cross hairs 81 of the microscope as the slide 17 is moved in the Y direction. To cope with this, the rotatable slide 26 (FIG. 11) is angularly moved through $\theta$ by means of the adjustment screw 27 until the straight line on the workpiece 1 coincides with the Y direction so that the desired machining positions B2 through BN will not be progressively deviated from the crossing point of the cross hairs 81 when the positions B2 through BN are successively observed with the microscope 12.

After the above angular adjustment has been performed, and the sample position is adjusted to align BI again with the cross hairs, the slide table 14 is moved toward the machining electrode 4, and the slide 17 is moved progressively in increments in the Y direction by means of the feed screw 18 while holes are formed in the workpiece 1 successively at the desired positions BI through BN. The formed holes are accurately aligned along a straight line without suffering from any unwanted angular error with respect to the Y direction or the reference surface.

With the arrangement of the present invention, minute holes can be formed at a high speed in a workpiece at positions accurately determined in a non-contact fashion without any parallax. When the machining electrode is rotated, the electrode core wire therein is subjected to no appreciable displacement relative to the mandrel or rotatable support body, whereby minute holes of small out-of-roundness, high shape accuracy, and surface roughness of 1 micron or smaller can be formed in the workpiece. As the electrode core wire is consumed, it can be fed out from within the rotatable support body. Since a commercially available thin core wire can be used as the electrode core wire, a machining electrode of a long service life can easily be manufactured.

Although certain preferred embodiments of the present invention have been shown and described in detail, it should be understood that various changes and modifications may be made therein without departing from the scope of the appended claims.

## Claims

1. An electrical discharge machining apparatus for forming a minute hole in a workpiece (1), including a machining electrode (4) for forming the minute hole by electrical discharge, means (19, 19a, 42, 43, 44) to move the electrode (4) towards and away from the workpiece (1), a table (14) on which the workpiece (1) is to be located, means (13, 18, 27) for adjusting the workpiece position and workpiece position sensing means (12, 21b, 21c) for sensing marked positions on the workpiece (1) characterised in that the table (14) is movable between first and second positions respectively associated with the electrode (4) and with the position sensing means (12, 21b, 21c), in that stop means (31, 32) are provided for defining the first and second positions by limiting movement of the table (14), and in that the position sensing means (12, 21b, 21c) are movable so that when the table (14) is in the second position the position sensing means (12, 21, 21c) may be used for detecting, and moving to a position corresponding to, a position marked on the workpiece (1) by the electrode when the table was in the first position, so as to be in a fixed relation to the electrode position, and in that the means (13, 18, 27) for adjusting the workpiece position are arranged so as to be able to adjust the workpiece position without altering the movement which the table (14) makes in travelling between the first and second positions, such that a part of the workpiece sensed by the position sensing means (12, 21b, 21c) when the table (14) is in the second position and the position sensing means (12, 21b, 21c) are in said fixed relation can, on movement of the table from the second position to the first position, be brought into register with the electrode (4).

2. An electrical discharge machining apparatus according to claim 1 characterised in that the workpiece position sensing means (12) comprise a microscope, and that the apparatus further comprises support means (6, 61, 62) having V-shaped grooves for supporting said machining electrode (4) therein and rotating means (5, 7, 8, 9) for rotating said machining electrode (4) about its own axis, and in that the first and second positions of the table (14) lie in a plane to which the said movement of the machining electrode (4) extends perpendicularly, and in that the microscope (12) is disposed upwardly of said second position and is movable in said plane, and in that said microscope (12) has a sight (15) for observing the workpiece (1) from above.

3. An electrical discharge machining apparatus according to claim 2, characterised in that said support means (6, 61, 62) comprises a pair of upper and lower members having said V-shaped grooves, respectively, said machining electrode (4) being supported in said V-shaped grooves against said upper and lower members.

4. An electrical discharge machining apparatus according to claim 2 or 3 characterised in that said support means (6, 61, 62) includes protruding members (76) projecting on surfaces defining said V-shaped grooves.

5. An electrical discharge machining apparatus according to any one of claims 1 to 4, characterised in that said means (19, 19a, 42, 43, 44) for moving the machining electrode (19, 19a, 42, 43, 44) includes a lever (44) having an end against which an upper end of said machining electrode (4) is held, a motor (43), a feed screw (19) axially movable in response to rotation of said motor (43) and held against an opposite end of said lever (44), said lever (44) having a pivotally supported intermediate portion.

6. An electrical discharge machining apparatus according to any one of claims 2 to 4, characterised in that said rotating means (5, 7, 8, 9) comprises a first pulley (7) mounted on said machining electrode (4), a motor (8), a second pulley (9) rotatable by said motor (8), and a belt (5) trained around said first (7) and second (9) pulleys, said second pulley (9) being disposed upwardly of said first pulley (7).

7. An electrical discharge machining apparatus according to any one of the preceding claims, characterised in that said means (19, 19a, 42, 43, 44) for moving the machining electrode is incorporated in a machining head (10).

8. An electrical discharge machining apparatus according to claim 2, 3 or 4 characterised in that said machining electrode (4) and said support means (6, 61, 62) are electrically insulated from said rotating means (5, 7, 8, 9) and said machining electrode moving means (19, 19a, 42, 43, 44).

9. An electrical discharge machining apparatus according to any one of the preceding claims, characterised in that a machining bath (2) for placing the workpiece (1) therein is mounted on said table (14), said machining bath (2) being slidable and angularly movable on said table (14).

10. An electrical discharge machining apparatus according to any one of the preceding claims, characterised in that said table (14) is spring-biased into abutment against one of said stoppers (31) and magnetically attractable against the other stopper (32).

11. An electrical discharge machining apparatus according to any one of the preceding claims, characterised in that said machining electrode (4) comprises an electrode core wire (51), a support tube (52) having a bore in which said electrode core wire (51) is slidably supported, said support tube (52) having an outer peripheral surface substantially coaxial with said bore, a support body (53) connected to said support tube (52), and means (56) providing electric conduction between said electrode core wire (51) and said support body (53).

12. An electrical discharge machining apparatus according to claim 11, characterised in that said machining electrode (4) also includes a hollow guide sleeve (54) in which said support tube (52) and said support body (53) are closely fitted and retained.

13. An electrical discharge machining apparatus according to claim 11 or 12 characterised in that said support body (53) has a bore in which said support tube (52) is supported and an outer peripheral surface substantially coaxial with said bore in said support body (53).

14. An electrical discharge machining apparatus according to claim 11, 12 or 13 characterised in that said means (56) providing electric conduction comprises an electrically conductive pipe mounted on an end of said electrode core wire (51) in said support body (53) and a setscrew (55) by which said electrically conductive pipe is held against and secured to said support body (53).

15. An electrical discharge machining apparatus according to any one of claims 11 to 14 characterised in that said support tube (52) is fitted in said support body (53) such that a direction in which there is any deviation between centers of the bore and outer peripheral surface of said support tube (52) is opposed to a direction in which there is any deviation between centers of the bore and outer peripheral surface of said support body (53) such as to minimize the combined deviation.

16. An electrical discharge machining apparatus according to any one of claims 11 to 15 characterised in that said support tube (52) comprises a ceramic tube.

17. An electrical discharge machining apparatus according to any one of claims 11 to 16, characterised in that said support tube (52) is formed from a sintered material by vacuum extrusion molding.

18. An electrical discharge machining apparatus according to claim 11, wherein said support body (53) and said hollow guide sleeve (54) are integrally formed of the same material.

19. An electrical discharge machining apparatus according to any one of claims 11 to 17 characterised in that said support tube (52) has three radial screws (71) at substantially 120°-spaced intervals, said three radial screws (71) having tip ends positionable in contact with the outer peripheral surface of said support tube (52).

20. An electrical discharge machining apparatus according to any one of claims 11 to 19 characterised in that said electrode core wire (51) has a passage (72, 75) for discharging chips (74) produced from the workpiece (1) by the electrode core wire (51).

21. An electrical discharge machining apparatus according to claim 20, characterised in that said passage comprises a recess (72) extending from a tip end of said electrode core wire (51) toward said support body (53).

22. An electrical discharge machining apparatus according to claim 20, characterised in that said passage comprises a groove (75) extending helically from a tip end of said electrode core wire (51) toward said support body (53).

23. An electrical discharge machining apparatus according to claim 5, characterised in that it includes a motor control circuit for rotating said motor (43) at a certain speed to feed said feed screw (19) at a constant speed to move said machining electrode (4) toward the workpiece (1) while an electrical discharge is being produced between said machining electrode 4 and said workpiece (1), and for reversing said motor (43) at a higher speed when said machining electrode (4) and said workpiece (1) are short-circuited.

24. An electrical discharge machining apparatus for forming a minute hole in a workpiece (1) according to claim 1 characterised by a base (3), a table assembly (14, 17, 29) including said table (14) and movably mounted on said base (3) for moving the workpiece (1) in at least first and second directions parallel to said base and perpendicular to each other, and in that said positioning means (12) comprises a microscope and said machining electrode (4) is incorporated in a machining head (10) said machining head (10) and said microscope (12) being juxtaposed in said first direction in confronting relation to said table assembly (14, 17, 29), said microscope (12) being movable in said first and second directions with respect to said base (3), said table assembly (14, 27, 29) comprising a top table (29) for supporting the workpiece (1), said table (14) supporting said top table, and a bottom table (17) mounted on said base (3) and supporting said table (14), said top table (29) having at least one of means (13) for moving it in said first direction and means (27) for angularly moving it through a small angular interval, one of said table (14) and bottom table (18) being slidable in said first direction and the other in said second direction, said stop means (31, 32) including first stop means (31) for holding said one of the table (14) and bottom table (17) in the first position in which said machining head (10) confronts the workpiece (1), and second stop means (32) for holding said one of the table (14) and bottom table (17) in the second position in which said workpiece (1) confronts said microscope (12).

25. An electrical discharge machining apparatus according to claim 1 including an electrical discharge machining electrode (4) for forming a minute hole in a workpiece (1), comprising an electrode core wire (51), a support tube (52) having a bore in which said electrode core wire (51) is slidably supported, said support tube (52) having an outer peripheral surface substantially coaxial with said bore, a hollow guide sleeve (54) in which said support tube (52) is supported, and a support body (53) fitted and held in said guide sleeve (54), said electrode core wire (51) and said support body (53) being in electrically conductive relation to each other.

26. An electrical discharge machining apparatus according to claim 1 including an electrical discharge machining electrode (4) for forming a minute hole in a workpiece (1), comprising an electrode core wire (51), a support tube (52) having a bore in which said electrode core wire (51) is slidably supported, said support tube (52) having an outer peripheral surface substantially coaxial with aid bore, and a support body (53) having a bore in which said support tube (52) is fitted and supported, said support body (53) having an outer peripheral surface substantially coaxial with said last-mentioned bore.

**Patentansprüche**

1. Elektrische Funkenerosionsvorrichtung zur Bildung einer Feinbohrung in einem Werkstück (1), mit einer Funkenerosions-Elektrode (4) zum Bilden der Feinbohrung durch Funkenerosion, Mitteln (19, 19a, 42, 43, 44) zur Bewegung der Elektrode (4) zu dem Werkstück (1) hin und von ihm weg, einem Tisch (14), an welchem das Werkstück (1) anzuordnen ist, Mitteln (13, 18, 27) zum Einstellen der Werkstückstellung und Werkstückstellungs-Fühlermitteln (12, 21b, 21c) zum Erfassen markierter Stellen an dem Werkstück (1), dadurch gekennzeichnet, daß der Tisch (14) zwischen ersten und zweiten Stellungen bewegbar ist, die jeweils der Elektrode (4) bzw. den Stellungfühlermitteln (12, 21b, 21c) zugeordnet sind, daß Anschlagmittel (31, 32) vorgesehen sind zur Bestimmung der ersten bzw. zweiten Stellung durch Begrenzung der Bewegung des Tisches (14), und daß die Stellungfühlermittel (12, 21b, 21c) so bewegbar sind, daß, wenn der Tisch (14) sich in der zweiten Stellung befindet, die Stellungsfühlermittel (12, 21b, 21c) benutzt werden können, um eine an dem Werkstück (1) durch die Elektrode bei in der ersten Stellung befindlichem Tisch an dem Werkstück (1) markierte Stellung zu erfassen und in eine entsprechende Stellung zu bewegen, um so in einer festen Beziehung zur Elektrodenstellung zu sein, und daß die Mittel (13, 18, 27) zum Einstellen der Werkstücksstellung so angeordnet sind, daß die Einstellung der Werkstücksstellung ohne Änderung der Bewegung, die der Tisch (14) beim Lauf zwischen der ersten und der zweiten Stellung ausführt, möglich ist, so daß ein durch die Stellungsfühlermittel (12, 21b, 21c) bei in der zweiten Stellung befindlichem Tisch (14) und in der festen Beziehung befindlichen Stellungsfühlermitteln (12, 21b, 21c) erfaßter Teil des Werkstückes bei Bewegung des Tisches von der zweiten Stellung in die erste Stellung in Ausrichtung mit der Elektrode (4) gebracht werden kann.

2. Elektrische Funkenerosionsvorrichtung nach Anspruch 1, dadurch gekennzeichnet, daß das Werkstücksstellungs-Fühlermittel (12) ein Mikroskop umfaßt, und daß die Vorrichtung weiter Support-Mittel (6, 61, 62) mit V-förmigen Nuten zum Abstützen der Erosions-Elektrode (4) und Drehantriebmittel (5, 7, 8, 9) zum Drehen der Bearbeitungselektrode (4) um ihre eigene Achse enthält, und daß die erste und zweite Stellung des Tisches (14) in einer senkrecht zur Bewegungsrichtung der Bearbeitungselektrode (4) stehenden Ebene liegen, und daß das Mikroskop (12) über der zweiten Stellung angeordnet und in der Ebene bewegbar ist, und daß das Mikroskop (12) einen Einblick (15) zur Beobachtung des Werkstückes (1) von oben besitzt.

3. Elektrische Funkenerosionsvorrichtung nach Anspruch 2, dadurch gekennzeichnet, daß das Supportmittel (6, 61, 62) ein Paar aus oberem und unterem Teil mit jeweils den V-förmigen Nuten umfaßt, und daß die Bearbeitungselektrode (4) in den V-förmigen Nuten gegen das obere und das untere Teil abgestützt ist.

4. Elektrische Funkenerosionsvorrichtung nach Anspruch 2 oder 3, dadurch gekennzeichnet, daß das Supportmittel (6, 61, 62) vorstehende Teile (76) enthält, die von den die V-förmigen Nuten bestimmenden Flächen abstehen.

5. Elektrische Funkenerosionsvorrichtung nach einem der Ansprüche 1 bis 4, dadurch gekennzeichnet, daß die Mittel (19, 19a, 42, 43, 44) zum Bewegen der Bearbeitungselektrode (4) enthalten einen Hebel (44) mit einem Ende, gegen das ein oberes Ende der Bearbeitungselektrode (4) gehalten ist, einen Motor (43), eine Zustellspindel (19), die in Abhängigkeit von der Drehung des Motors (43) axial bewegbar und gegen ein entgegengesetzt liegendes Ende des Hebels (44) angelegt ist, wobei der Hebel (44) einen schwenkbar abgestützten Zwischenabschnitt besitzt.

6. Elektrische Funkenerosionsvorrichtung nach einem der Ansprüche 2 bis 4, dadurch gekennzeichnet, daß das Drehantriebsmittel (5, 7, 8, 9) eine erste an der Bearbeitungselektrode (4) angebrachte Riemenscheibe (7), einen Motor (8), eine zweite durch den Motor (8) drehbare Riemenscheibe (9) und eine um die erste (8) und die zweite (9) Riemenscheibe gezogenen Riemen (5) enthält, wobei die zweite Riemenscheibe (9) oberhalb der ersten Riemenscheibe (7) angeordnet ist.

7. Elektrische Funkenerosionsvorrichtung nach einem der vorangehenden Ansprüche, dadurch gekennzeichnet, daß die Mittel (19, 19a, 42, 43, 44) zum Bewegen der Bearbeitungselektrode in einem Bearbeitungskopf (10) aufgenommen sind.

8. Elektrische Funkenerosionsvorrichtung nach Anspruch 2, 3 oder 4, dadurch gekennzeichnet, daß die Bearbeitungselektrode (4) und die Supportmittel (6, 61, 62) elektrisch gegen die Drehantriebsmittel (5, 7, 8, 9) und die Bewegungsmittel (19, 19a, 42, 43, 44) für die Bearbeitungselektrode isoliert sind.

9. Elektrische Funkenerosionsvorrichtung nach einem der vorangehenden Ansprüche, dadurch gekennzeichnet, daß ein Bearbeitungsbad (2) zum Einsetzen des Werkstückes (1) an dem Tisch (14) angebracht ist, wobei das Bearbeitungsbad (2) an dem Tisch (14) gleitend und in Winkelrichtung bewegbar ist.

10. Elektrische Funkenerosionsvorrichtung nach einem der vorangehenden Ansprüche, dadurch gekennzeichnet, daß der Tisch (14) federnd in Anlage an den einen Anschlag (31) gehalten und magnetisch an den anderen Anschlag (32) anziehbar ist.

11. Elektrische Funkenerosionsvorrichtung nach einem der vorangehenden Ansprüche, dadurch gekennzeichnet, daß die Bearbeitungselektrode (4) enthält einen Elektroden-Kerndraht (51), ein Stützrohr (52) mit einer Bohrung, in der der Elektroden-Kerndraht (51) gleitend abgestützt ist, wobei das Stützrohr (52) eine im wesentlichen mit der Bohrung koaxiale Außenumfangsfläche aufweist, ein mit dem Stützrohr (52) verbundenes Stützgehäuse (53) und Mittel (56) zur Schaffung elektrischer Leitverbindung zwischen dem Elektrodenkerndraht (51) und dem Stützgehäuse (53).

12. Elektrische Funkenerosionsvorrichtung nach Anspruch 11, dadurch gekennzeichnet, daß die Bearbeitungselektrode (4) auch eine hohle Führungshülse (54) enthält, in der das Stützrohr (52) und das Stützgehäuse (53) eng eingepaßt und gehalten sind.

13. Elektrische Funkenerosionsvorrichtung nach Anspruch 11 oder 12, dadurch gekennzeichnet, daß das Stützgehäuse (53) eine Bohrung besitzt, in der das Stützrohr (52) abgestützt ist, und eine im wesentlichen mit der Bohrung in dem Stützgehäuse (53) koaxiale Außenumfangsfläche.

14. Elektrische Funkenerosionsvorrichtung nach Anspruch 11, 12 oder 13, dadurch gekennzeichnet, daß das elektrische Leitverbindung schaffende Mittel (56) eine an einem Ende des ElektrodenKerndrahtes (51) in dem Stützgehäuse (53) angebrachte elektrisch leitende Röhre und eine Stellschraube (55) umfaßt, durch die die elektrisch leitende Röhre gegen das Stützgehäuse (53) gehalten und an ihm gesichert ist.

15. Elektrische Funkenerosionsvorrichtung nach einem der Ansprüche 11 bis 14, dadurch gekennzeichnet, daß das Stützrohr (52) in das Stützgehäuse (53) so eingepaßt ist, daß eine Richtung, in der irgendeine Abweichung zwischen den Mitten der Bohrung und der Außenumfangsfläche des Stützrohres (52) besteht, entgegengesetzt zu einer Richtung liegt, in der irgendeine Abweichung zwischen den Mitten der Bohrung und der Außenumfangsfläche des Stützgehäuses (53) liegt, um so die Gesamtabweichung möglichst gering zu halten.

16. Elektrische Funkenerosionsvorrichtung nach einem der Ansprüche 11 bis 15, dadurch gekennzeichnet, daß das Stützrohr (52) ein Keramikrohr umfaßt.

17. Elektrische Funkenerosionsvorrichtung nach einem der Ansprüche 11 bis 16, dadurch gekennzeichnet, daß das Stützrohr (52) durch Vakuum-Extrusionsschmelzen aus einem gesinterten Material gebildet ist.

18. Elektrische Funkenerosionsvorrichtung nach Anspruch 11, bei der das Stützgehäuse (53) und die hohle Führungshülse (54) integral aus dem gleichen Material gebildet sind.

19. Elektrische Funkenerosionsvorrichtung nach einem der Ansprüche 11 bis 17, dadurch gekennzeichnet, daß das Stützrohr (52) drei Radialschrauben (71) mit im wesentlichen 120°-Abständen besitzt, wobei die drei Radialschrauben (71) spitze Enden besitzen, die mit der Außenumfangsfläche des Stützrohres (52) in Kontakt setzbar sind.

20. Elektrische Funkenerosionsvorrichtung nach einem der Ansprüche 11 bis 19, dadurch gekennzeichnet, daß der Elektroden-Kerndraht (51) einen Durchlaß (72, 75) zum Auslassen von Spänen (74) besitzt, die durch den Elektroden-Kerndraht (51) an dem Werkstück (1) erzeugt sind.

21. Elektrische Funkenerosionsvorrichtung nach Anspruch 20, dadurch gekennzeichnet, daß der Durchlaß einen von der Endspitze des Elektroden-Kerndrahtes (51) zu dem Stützgehäuse (53) reichenden Einschnitt (72) umfaßt.

22. Elektrische Funkenerosionsvorrichtung nach Anspruch 20, dadurch gekennzeichnet, daß der Durchlaß eine von einer Endspitze des Elektroden-Kerndrahtes (51) wendelförmig zu dem Stützgehäuse (53) reichende Nut umfaßt.

23. Elektrische Funkenerosionsvorrichtung nach Anspruch 5, dadurch gekennzeichnet, daß sie einen Motorsteuerkreis zum Drehen des Motors (43) mit einer gewissen Geschwindigkeit zum Vorschieben der Vorschubspindel (19) mit einer konstanten Geschwindigkeit umfaßt, um die Bearbeitungselektrode (4) zu dem Werkstück (1) hin zu bewegen, während eine elektrische Entladung zwischen der Bearbeitungselektrode (4) und dem Werkstück (1) erzeugt ist, und zum Umkehren des Motores (43) mit einer höheren Geschwindigkeit, wenn die Bearbeitungselektrode (4) das Werkstück (1) einen Kurzschluß bilden.

24. Elektrische Funkenerosionsvorrichtung zur Herstellung einer Feinbohrung in einem Werkstück (1) nach Anspruch 1, dadurch gekennzeichnet, daß ein Grundteil (3), eine Tischanordnung (14, 17, 29), den Tisch (14) einschließend und an dem Grundteil (3) bewegbar angebracht ist, um das Werkstück (1) in mindestens ersten und zweiten, zum Grundteil parallelen und aufeinander senkrechten Richtungen zu bewegen, daß das Positioniermittel (12) ein Mikroskop umfaßt und daß die Bearbeitungselektrode (4) in einem Bearbeitungskopf (10) aufgenommen ist, wobei der Bearbeitungskopf (10) und das Mikroskop (12) in der ersten Richtung gegenüber der Tischanordnung (14, 17, 29) nebeneinander gesetzt sind, das Mikroskop (12) in der ersten und zweiten Richtung mit Bezug auf das Grundteil (3) bewegbar ist, die Tischanordnung (14, 27, 29) einen Obertisch (29) zum Abstützen des Werkstückes (1) umfaßt, wobei der Tisch (14) den Obertisch abstützt, und daß ein Untertisch (17) an dem Grundteil (3) befestigt ist und den Tisch (14) abstützt, wobei der Obertisch (29) mindestens ein Mittel (13) zur Bewegung desselben in der ersten Richtung und Mittel (27) zur Winkelbewegung desselben über einen kleinen Winkelabstand besitzt, wobei entweder der Tisch (14) oder der Untertisch (17) in der ersten Richtung gleitbar und der jeweils andere Teil in der zweiten Richtung gleitbar ist, die Anschlagmittel (31, 32) erste Anschlagmittel (31) zum Halten entweder des Tisches (14) oder des Untertisches (17) in der ersten Stellung enthalten, in der der Bearbeitungskopf (10) dem Werkstück (1) gegenüber liegt, und zweite Anschlagmittel (32) zum Halten entweder des Tisches (14) oder des Untertisches (17) in der zweiten Stellung, in der das Werkstück (1) dem Mikroskop (12) gegenüberliegt.

25. Elektrische Funkenerosionsvorrichtung nach Anspruch 1 mit einer elektrischen Funkenerosions-Bearbeitungselektrode (4) zur Bildung einer Feinbohrung in einem Werkstück (1), mit einem Elektroden-Kerndraht (51), einem Stützrohr (52) mit einer Bohrung, in der der Elektroden-Kerndraht (51) gleitend abgestützt ist, wobei das Stützrohr (52) eine im wesentlichen mit der Bohrung koaxiale Außenumfangsfläche besitzt, einer hohlen Führungshülse (54), in der das Stützrohr (52) abgestützt ist und einem Stützgehäuse (53), das in die Führungshülse (54) eingepaßt und in ihr gehalten ist, wobei der Elektroden-Kerndraht (51) und das Stützgehäuse (53) in elektrischer Leitbeziehung zueinander sind.

26. Elektrische Funkenerosionsvorrichtung nach Anspruch 1 mit einer elektrischen Funkenerosions-Bearbeitungselektrode (4) zur Bildung einer Feinbohrung in einem Werkstück (1), mit einem Elektroden-Kerndraht (51), einem Stützrohr (52) mit einer Bohrung, in der der Elektroden-Kerndraht (51) gleitend abgestützt ist, wobei das Stützrohr (52) eine im wesentlichen zu der Bohrung koaxiale Außenumfangsfläche besitzt, und einem Stützgehäuse (53) mit einer Bohrung, in die das Stützrohr (52) eingepaßt und in der es abgestützt ist, wobei das Stützgehäuse (53) eine im wesentlichen mit der zuletzt erwähnten Bohrung koaxiale Außenumfangsfläche aufweist.

**Revendications**

1. Dispositif d'usinage par étincelage pour formation d'un trou fin dans une pièce (1) à usiner, comprenant une électrode d'usinage (4) pour former le trou fin par étincelage, des moyens (19, 19a, 42, 43, 44) pour déplacer l'électrode (4) vers la pièce (1) et l'en éloigner, une table (14) sur laquelle la pièce (1) doit être placée, des moyens (13, 18, 27) pour régler la position de la pièce et des moyens de détection de position de pièce (12, 21b, 21c) pour détecter des positions marquées sur la pièce (1) caractérisé en ce que la table (14) est mobile entre des première et seconde positions respectivement associées à l'électrode (4) et aux moyens de détection de position (12, 21b, 21c), en ce que des moyens d'arrêt (31, 32) sont créés pour définir les première et seconde positions en limitant le mouvement de la table (14), et en ce que les moyens de détection de position (12, 21b, 21c) sont mobiles de sorte que lorsque la table (14) est dans la seconde position les moyens de détection de position (12, 21b, 21c) peuvent être utilisés pour détecter, et déplacer vers une position correspondant à une position marquée sur la pièce (1) par l'électrode lorsque la table était dans la première position, de manière à se trouver dans une relation fixe par rapport à la position de l'électrode, et en ce que les moyens (13, 18, 27) pour régler la position de la pièce sont arrangés de manière à être capable de régler la position de la pièce sans modifier le mouvement qu'effectue la table (14) en se déplaçant entre les première et seconde positions, de sorte qu'une partie de la pièce détectée par les moyens de détection de position (12, 21b, 21c) lorsque la table (14) est dans la seconde position et les moyens de détection de position (12, 21b, 21c) sont dans ladite relation fixe peut, sur le mouvement de la table de la seconde position à la première position, être amenée en correspondance avec l'électrode (4).

2. Dispositif d'usinage par étincelage selon la revendication 1 caractérisé en ce que les moyens de détection de position de pièce (12) comprennent un· microscope, et que le dispositif comprend en outre des moyens de support (6, 61, 62) ayant des rainures en V pour supporter ladite électrode d'usinage (4) au dedans et des moyens rotatifs (5, 7, 8, 9) pour faire tourner ladite électrode d'usinage (4) autour de son propre axe, et en ce que les première et seconde positions de la table (14) sont placées dans un plan vers lequel ledit mouvement de l'électrode d'usinage (4) s'étend de façon perpendiculaire, et en ce que le microscope (12) est placé en amont de ladite seconde position et est mobile dans ledit plan, et en ce que ledit microscope (12) a un viseur (15) pour observer la pièce (1) d'en haut.

3. Dispositif d'usinage par étincelage selon la revendication 2, caractérisé en ce que lesdits moyens de support (6, 61, 62) comprennent une paire d'éléments supérieur et inférieur comportant lesdites rainures en V, respectivement, ladite électrode d'usinage (4) étant appuyée dans lesdites rainures en V contre lesdits éléments supérieur et inférieur.

4. Dispositif d'usinage par étincelage selon la revendication 2 ou 3 caractérisé en ce que lesdits moyens de support (6, 61, 62) comprennent des éléments saillants (76) débordant sur les surfaces qui définissent lesdites rainures en V.

5. Dispositif d'usinage par étincelage selon l'une quelconque des revendications 1 à 4, caractérisé en ce que lesdits moyens (19, 19a, 42, 43, 44) pour déplacer l'électrode d'usinage comprennent un levier (44) ayant une extrémité contre laquelle une extrémité supérieure de ladite électrode d'usinage (4) est maintenue, un moteur (43), une vis d'alimentation (19) mobile axialement en réponse à la rotation dudit moteur (43) et maintenue contre une extrémité opposée dudit levier (44), ledit levier (44) ayant une partie intermédiaire soutenue de manière pivotante.

6. Dispositif d'usinage par étincelage selon l'une quelconque des revendications 2 à 4, caractérisé en ce que lesdits moyens rotatifs (5, 7, 8, 9) comprennent une première poulie (7) montée sur ladite électrode d'usinage (4), un moteur (8), une seconde poulie (9) mise en rotation par ledit moteur (8), et une courroie (5) entraînée autour desdites première (7) et seconde (9) poulies, ladite seconde poulie (9) étant placée en amont de ladite première poulie (7).

7. Dispositif d'usinage par étincelage selon l'une quelconque des précédentes revendications, caractérisé en ce que lesdits moyens (19, 19a, 42, 43, 44) pour déplacer l'électrode d'usinage sont incorporés dans une tête d'usinage (10).

8. Dispositif d'usinage par étincelage selon la revendication 2, 3 ou 4 caractérisé en ce que ladite électrode d'usinage (4) et lesdits moyens de support (6, 61, 62) sont électriquement isolés desdits moyens rotatifs (5, 7, 8, 9) et desdits moyens de déplacement d'électrode d'usinage (19, 19a, 42, 43, 44).

9. Dispositif d'usinage par étincelage selon l'une quelconque des précédentes revendications, caractérisé en ce qu'un bain d'usinage (2) pour placer la pièce (1) dedans est monté sur ladite table (14), ledit bain d'usinage (2) pouvant glisser et se déplacer de façon angulaire sur ladite table (14).

10. Dispositif d'usinage par étincelage selon l'une quelconque des précédentes revendications, caractérisé en ce que ladite table (14) est sollicitée par ressort à buter contre l'un desdits arrêts (31) et magnétiquement attirée contre l'autre arrêt (32).

11. Dispositif d'usinage par étincelage selon l'une quelconque des précédentes revendications, caractérisé en ce que ladite électrode d'usinage (4) comprend une âme d'électrode (51), un tube de support (52) ayant un alésage dans lequel ladite âme d'électrode (51) est supportée de façon coulissante, ledit tube de support (52) ayant une surface périphérique externe sensiblement coaxiale audit alésage, un corps de support (53) relié audit tube de support (52), et des moyens (56) créant une conduction électrique entre ladite âme d'électrode (51) et ledit corps de support (53).

12. Dispositif d'usinage par étincelage selon la revendication 11, caractérisé en ce que ladite électrode d'usinage (4) comprend également un manchon de guidage creux (54) dans lequel ledit tube de support (52) et ledit corps de support (53) sont étroitement insérés et maintenus.

13. Dispositif d'usinage par étincelage selon la revendication 11 ou 12 caractérisé en ce que ledit corps de support (53) a un alésage dans lequel ledit tube de support (52) est supporté et une surface périphérique externe sensiblement coaxiale audit alésage dans ledit corps de support (53).

14. Dispositif d'usinage par étincelage selon la revendication 11, 12 ou 13 caractérisé en ce que lesdits moyens (56) créant la conduction électrique comprennent un tuyau électroconducteur monté sur une extrémité de ladite âme d'électrode (51) dans ledit corps de support (53) et une vis de calage (55) par laquelle ledit tuyau électroconducteur est maintenu contre et fixé audit corps de support (53).

15. Dispositif d'usinage par étincelage selon l'une quelconque des revendications 11 à 14 caractérisé en ce que ledit tube de support (52) est inséré dans ledit corps de support (53) de sorte qu'une direction dans laquelle il existe une quelconque déviation entre des centres de l'alésage et de la surface périphérique externe dudit tube de support (52) est opposée à une direction dans laquelle il existe une quelconque déviation entre des centres de l'alésage et de la surface périphérique externe dudit corps de support (53) de manière à minimaliser la déviation conjuguée.

16. Dispositif d'usinage par étincelage selon l'une quelconque des revendications 11 à 15 caractérisé en ce que ledit tube de support (52) comprend un tube en céramique.

17. Dispositif d'usinage par étincelage selon l'une quelconque des revendications 11 à 16, caractérisé en ce que ledit tube de support (52) est fait d'une matière frittée par moulage par extrusion sous vide.

18. Dispositif d'usinage par étincelage selon la revendication 11, dans lequel ledit corps de support (53) et ledit manchon de guidage creux (54) sont intégralement faits de la même matière.

19. Dispositif d'usinage par étincelage selon l'une quelconque des revendications 11 à 17 caractérisé en ce que ledit tube de support (52) a trois vis radiales (71) à des intervalles espacés sensiblement à 120°, lesdites trois vis radiales (71) ayant des extrémités pouvant être placées en contact avec la surface périphérique externe dudit tube de support (52).

20. Dispositif d'usinage par étincelage selon l'une quelconque des revendications 11 à 19 caractérisé en ce que ladite âme d'électrode (51) a un passage (72, 75) pour décharger des copeaux (74) enlevés de la pièce (1) par l'âme d'électrode (51).

21. Dispositif d'usinage par étincelage selon la revendication 20, caractérisé en ce que ledit passage comprend un évidement (72) s'étendant depuis une extrémité de ladite âme d'électrode (51) vers ledit corps de support (53).

22. Dispositif d'usinage par étincelage selon la revendication 20, caractérisé en ce que ledit passage comprend une rainure (75) s'étendant de façon hélicoïdale depuis une extrémité de ladite âme d'électrode (51) vers ledit corps de support (53).

23. Dispositif d'usinage par étincelage selon la revendication 5, caractérisé en ce qu'il comprend un circuit de commande de moteur pour faire tourner ledit moteur (43) à une certaine vitesse pour alimenter ladite vis d'alimentation (19) à une vitesse constante afin de déplacer ladite électrode d'usinage (4) vers la pièce (1) pendant qu'un étincelage est produit entre ladite électrode d'usinage (4) et ladite pièce (1), et pour inverser le sens de rotation dudit moteur (43) à une vitesse supérieure lorsque ladite électrode d'usinage (4) et ladite pièce (1) sont court-circuitées.

24. Disposit d'usinage par étincelage pour formation d'un trou fin dans une pièce (1) selon la revendication 1 caractérisée par une base (3), un assemblage de table (14, 17, 29) comprenant ladite table (14) et monté de manière mobile sur ladite base (3) pour déplacer la pièce (1) dans au moins des première et seconde directions parallèles à ladite base et perpendiculaires l'une à l'autre, et en ce que ledit moyen de positionnement (12) comprend un microscope et ladite électrode d'usinage (4) est incorporée dans une tête d'usinage (10) ladite tête d'usinage (10) et ledit microscope (12) étant juxtaposés dans ladite première direction en relation de confrontation par rapport audit assemblage de table (14, 17, 29), ledit microscope (12) étant mobile dans lesdites première et seconde directions par rapport à ladite base (3), ledit assemblage de table (14, 17, 29) comprenant une table supérieure (29) pour supporter la pièce (1), ladite table (14) supportant ladite table supérieure, et une table inférieure (17) montée sur ladite base (3) et supportant ladite table (14), ladite table inférieure (29) ayant au moins un des moyens (13) pour la déplacer dans ladite première direction et des moyens (27) pour la déplacer de façon angulaire d'un petit intervalle angulaire, une desdites table (14) et table inférieure (17) pouvant glisser dans ladite premiére direction et l'autre dans ladite seconde direction, lesdits moyens d'arrêt (31, 32) comprenant des premiers moyens d'arrêt (31) pour maintenir l'une précitée des table (14) et table inférieure (17) dans la première position dans laquelle ladite tête d'usinage (10) fait face à ladite pièce (1), et des seconds moyens d'arrêt (32) pour maintenir l'une précitée des table (14) et table inférieure (17) dans la seconde position dans laquelle ladite pièce (1) fait face audit microscope (12).

25. Dispositif d'usinage par étincelage selon la revendication 1 comprenant une électrode d'usinage par étincelage (4) pour former un trou fin dans une pièce (1), comprenant une âme d'électrode (51), un tube de support (52) ayant un alésage dans lequel ladite âme d'électrode (51) est supportée en pouvant glisser, ledit tube de support (52) ayant une surface périphérique externe sensiblement coaxiale audit alésage, un manchon de guidage creux (54) dans lequel ledit tube de support (52) est supporté, et un corps de support (53) inséré et maintenu dans ledit manchon de guidage (54), ladite âme d'électrode (51) et ledit corps de support (53) étant en relation électroconductrice l'un par rapport à l'autre.

26. Dispositif d'usinage par étincelage selon la revendication 1 comprenant une électrode d'usinage par étincelage (4) pour former un trou fin dans une pièce (1), comprenant une âme d'électrode (51), un tube de support (52) ayant un alésage dans lequel ladite âme d'électrode (51) est supportée en pouvant glisser, ledit tube de support (52) ayant une surface périphérique externe sensiblement coaxiale audit alésage, et un corps de support (53) ayant un alésage dans lequel ledit tube de support (52) est inséré et supporté, ledit corps de support (53) ayant une surface périphérique externe sensiblement coaxiale audit alésage mentionné en dernier.

# FIG.1

# FIG.2

SERVO CNTL CKT

CURRENT MONITOR

# FIG. 3

55
4
53
54
52
51

# FIG. 4

51
54
4
56
52
53
55

# FIG.5

51

52   54

# FIG.6A

60   59   60

59'   59'

60   59'

# FIG.6B

60   57

60

59

58

59'

# FIG.7

51   56

4

FIG.8A

FIG.8B

FIG.8C

# F I G.9

# F I G.10

# FIG.11

# F I G.12

# FIG.13

EP 0 129 340 B1

# FIG.14

# FIG.15

FIG.16A

FIG.16B

FIG.17

## FIG.18

## FIG.19

## FIG.20

FIG.21A

FIG.21C

FIG.21B

# FIG.22A

# FIG.22B

# FIG.23A

# FIG.23B

14